# EUROPEAN PATENT APPLICATION

(11) **EP 2 647 901 A1**
(43) Date of publication of application: **09.10.2013**
(21) Application number: 11845295.2
(22) Date of filing: 10.06.2011
(51) Int. Cl.: F21S 2/00, F21V 19/00, F21V 21/096, F21V 23/00, F21Y 101/02

(54) **PLANAR LIGHT-EMITTING ILLUMINATION DEVICE**

(30) Priority: 01.12.2010 JP 2010268197
(71) Applicant: Sharp Kabushiki Kaisha, Osaka-shi, Osaka 545-8522 (JP)
(72) Inventor: FUKUSHIMA Koki, Osaka 545-8522 (JP); FUJINO, Hiroaki, Osaka 545-8522 (JP); SOMEI, Junichi, Osaka 545-8522 (JP)
(74) Representative: Müller - Hoffmann & Partner
(86) International application number: PCT/JP2011/063315
(87) International publication number: WO 2012/073543

(57) **Abstract**

A planar light-emitting illumination device includes: a light-emitting unit (41) that includes: a mounting substrate (41b) on which a light-emitting semiconductor element (41a) is mounted; and an input terminal (61a) conductive to the light-emitting semiconductor element (41a); and a housing (45) that holds a plurality of the light-emitting units (41) and includes a plurality of output terminals (61b) through which power from an external power supply is supplied to the light-emitting units (41), where the light-emitting unit (41) and the housing (45) are removably fixed by a connection unit that connects the input terminal (61a) and the output terminal (61b).

## Description

### Technical Field

The present invention relates to a planar light-emitting illumination device including a plurality of light-emitting semiconductor elements.

### Background Art

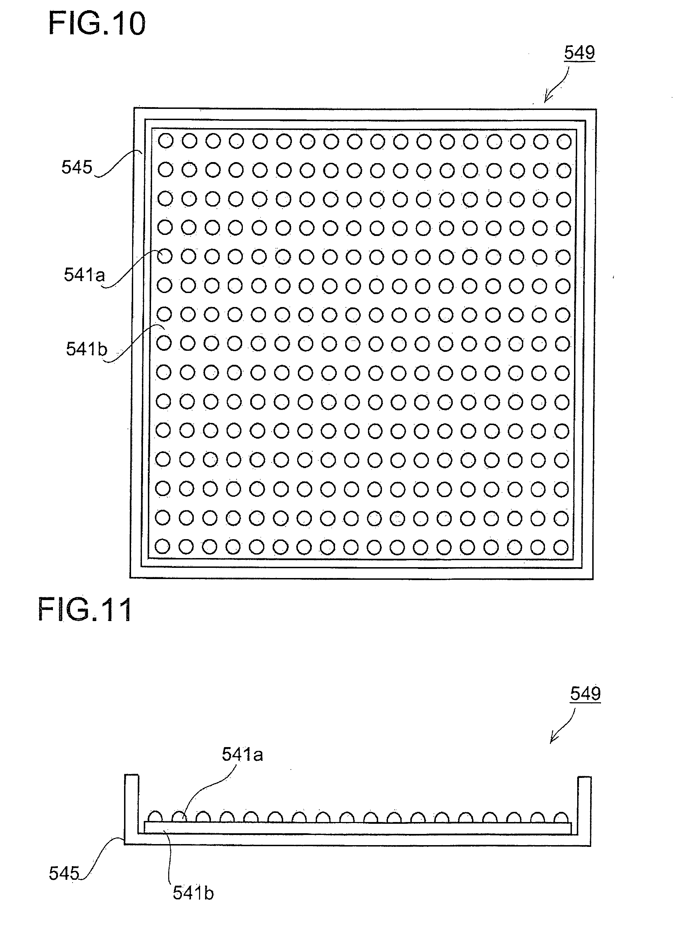

Patent document 1 discloses a planar light-emitting illumination device in which a plurality of point light sources formed with light-emitting semiconductor elements are arranged. As shown in a plan view of Fig. 10 and a cross-sectional view of Fig. 11, in this planar light-emitting illumination device 549, a plurality of LEDs 541 a (light-emitting diode) are arranged on the flat surface of a substrate 541b and are held in a housing 545, and thus the size and the brightness of the planar light-emitting illumination device are enhanced.

### Related Art Document

### Patent Document

Patent document 1: JP-A-2010-44922
Patent document 2: JP-A-2009-94087

### Disclosure of the Invention

### Problems to be Solved by the Invention

However, in the illumination device disclosed in patent document 1, when one of the LEDs 541a causes a failure due to a broken wire, the end of its life or the like, in order to replace the failure portion, it is necessary to remove the LED 541a soldered to the substrate 541b from the substrate 541b and to solder a new LED 541 a again to the substrate 541b. Thus, it is complicated to perform an operation of replacing the LED 541 a; in particular, it is difficult to solder a small LED 541 a due to its size. Depending on the situation, it may be necessary to replace the substrate 541b itself and perform a reflow step on all the LEDs 541 a.

The present invention is made in order to solve the foregoing problem; an object of the present invention is to provide a planar light-emitting illumination device in which an operation of replacing a light-emitting semiconductor element is easily performed.

### Means for Solving the Problem

To achieve the above object, according to the present invention, there is provided a planar light-emitting illumination device including: a light-emitting unit that includes: light-emitting semiconductor element; a mounting substrate on which the light-emitting semiconductor element is mounted; and an input terminal conductive to the light-emitting semiconductor element; and a housing that holds a plurality of the light-emitting units and includes a plurality of output terminals through which power from an external power supply is supplied to the light-emitting units, where the light-emitting unit and the housing are removably fixed by a connection unit that connects the input terminal and the output terminal.

In this configuration, the power from the external power supply is supplied via the connection unit from the output terminal through the input terminal to the light-emitting unit. A plurality of light-emitting units are fixed to the housing through the connection units.

In the planar light-emitting illumination device of the present invention configured as described above, the connection unit is formed with a convex portion and a concave portion that are fitted to each other.

In this configuration, through the convex portion and the concave portion, the input terminal and the output terminal are electrically connected to each other, and the convex portion and the concave portion are fitted to each other, and thus the light-emitting unit and the housing are fixed removably and physically.

In the planar light-emitting illumination device of the present invention configured as described above, the connection unit includes a conductive magnet.

In this configuration, through the conductive magnet, the input terminal and the output terminal are electrically connected to each other, and the light-emitting unit and the housing are fixed removably and physically by the magnetic force of the magnet.

In the planar light-emitting illumination device of the present invention configured as described above, the connection unit includes an elastic member, the housing includes a side wall that surrounds the light-emitting units and the input terminal provided on a side surface of the mounting substrate and the output terminal provided in the side wall are connected to each other by utilization of an elastic force of the connection unit.

In this configuration, the light-emitting unit is retained within the housing by the elastic force of the elastic member exerted between the side wall surrounding the light-emitting unit and the side surface of the light-emitting unit.

In the planar light-emitting illumination device of the present invention configured as described above, a plurality of the light-emitting semiconductor elements are arranged on the mounting substrate.

In the planar light-emitting illumination device of the present invention configured as described above, a drive circuit that feeds a control signal to the light-emitting semiconductor element is provided in the light-emitting unit.

The planar light-emitting illumination device of the present invention configured as described above includes a diffusion member that diffuses light from the light-emitting semiconductor element.

The planar light-emitting illumination device of the present invention configured as described above includes a light collection member that collects light from the light-emitting semiconductor element.

### Advantages of the Invention

In the present invention, when the light-emitting unit is held within the housing, the input terminal and the output terminal are electrically connected through the connection unit, and thus it is possible to supply the power form the external power supply to the light-emitting unit. Moreover, since a plurality of light-emitting unit are held within the housing, and the light-emitting units are removably fixed to the housing through the connection units, it is possible to efficiently perform an operation of removing only a light-emitting unit on which a faulty light-emitting semiconductor element is mounted and of replacing the light-emitting semiconductor element.

### Brief Description of Drawings

[Fig. 1] An exploded schematic perspective view of a planar light-emitting illumination device according to an embodiment of the present invention;
[Fig. 2] An exploded schematic cross-sectional view of the planar light-emitting illumination device shown in Fig. 1;
[Fig. 3] A schematic cross-sectional view of a light-emitting unit according to the embodiment of the present invention;
[Fig. 4] A partially enlarged schematic plan view of the light-emitting unit according to the embodiment of the present invention;
[Fig. 5] An exploded schematic cross-sectional view showing part of a planar light-emitting illumination device according to a variation of the embodiment of the present invention;
[Fig. 6] A schematic cross-sectional view of the planar light-emitting illumination device according to the variation of the embodiment of the present invention;
[Fig. 7] A partially enlarged schematic cross-sectional view of the planar light-emitting illumination device of Fig. 6;
[Fig. 8] An exploded schematic cross-sectional view showing part of a planar light-emitting illumination device according to a variation of the embodiment of the present invention;
[Fig. 9] A schematic plan view of the light-emitting unit according to the embodiment of the present invention;
[Fig. 10] A schematic plan view of a conventional light-emitting unit; and
[Fig. 11] A schematic cross-sectional view of the planar light-emitting illumination device shown in Fig. 10.

### Description of Embodiments

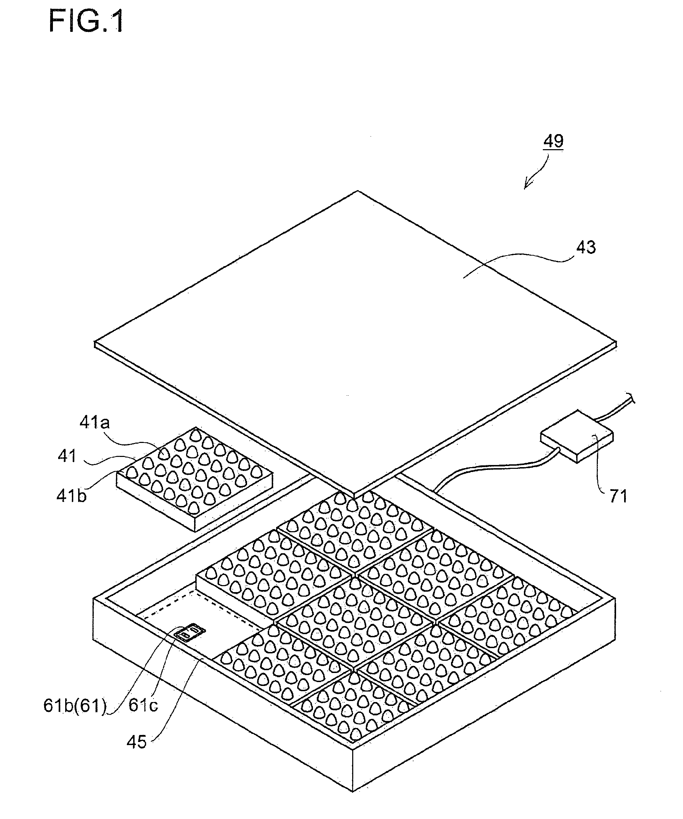

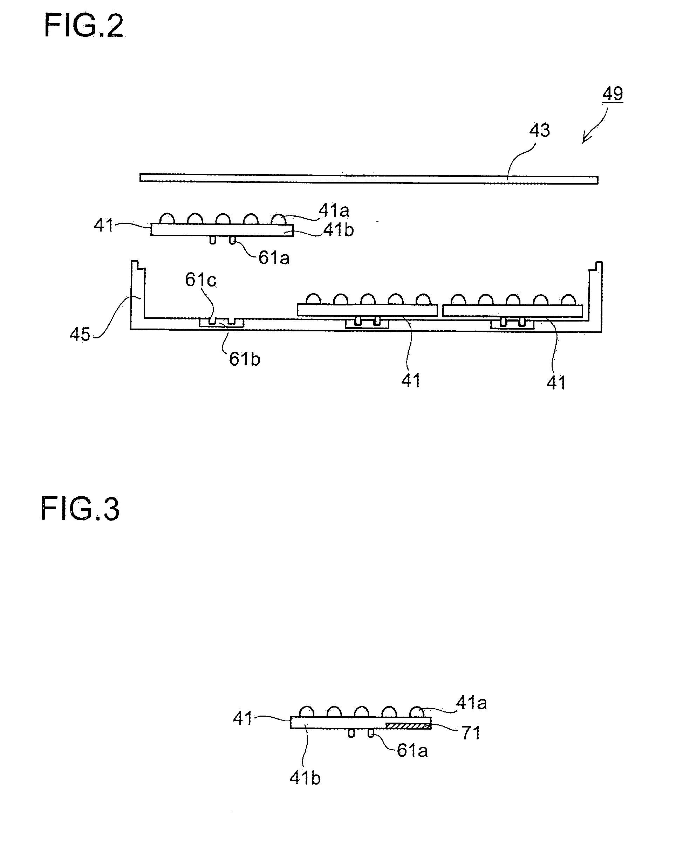

Embodiments of the present invention will be described in detail below with reference to accompanying drawings. Fig. 1 is an exploded schematic perspective view of a planar light-emitting illumination device according to an embodiment of the present invention; Fig. 2 is an exploded schematic cross-sectional view of the planar light-emitting illumination device shown in Fig. 1. For convenience, member symbols and the like may be omitted; in such a case, other drawings should be referenced.

The planar light-emitting illumination device 49 includes a plurality of light-emitting units 41, a light diffusion cover 43 and a housing 45 that holds them. A plurality of light-emitting units 41 are arranged through connection units 61 within the housing 45; the connection unit 61 is formed with a plug 61a and an outlet 61b; through the connection unit 61, the light-emitting unit 41 is electrically conductive to the housing 45 and is removably fixed to the housing 45. Thus, it is possible to remove only a faulty light-emitting unit 41 from the housing 45 and to efficiently replace an LED (light-emitting diode) 41a from the removed light-emitting unit 41. The details of the connection unit 61 will be described later.

The light-emitting unit 41 includes the LEDs 41a, a mounting substrate 41b on which they are mounted and the plug 61a. The LED 41a is a light-emitting semiconductor element (light source) that emits light; the LED 41a is mounted on an electrode formed on the substrate surface of the mounting substrate 41b. In order to acquire a sufficient amount of light, a plurality of LEDs 41a are packed on the mounting substrate 41b, and the light-emitting unit 41 by itself applies planar light.

Outside the housing 45, a control driver (drive circuit) 71 having a supply power adjustment function is provided. The mounting substrate 41b is electrically connected to the plug control driver 71 through the plug 61a provided on the back surface (the opposite surface to the installation surface of the LEDs 41a) of the mounting substrate 41b and the outlet 61b provided in the housing 45. In this way, a control signal from the control driver 71 reaches the LED 41a, and the light emission of the LED 41 a is controlled by the control signal. Within the housing 45, a plurality of outlet 61b are spaced regularly, the plugs 61a of the light-emitting units 41 are connected to the outlets 61b and thus the entire planar light-emitting illumination device 49 can apply large planar light through an aggregation of a plurality of light-emitting units 41. However, for convenience, in the figure, part of the LEDs 41a and the light-emitting units 41 are only shown.

Adjacent light-emitting units 41 are arranged within the housing 45 densely without any space between them, and thus it is possible to apply further uniform planar light from the entire light emission surface 50 of the planar light-emitting illumination device 49. Within the housing 45, a region where no light-emitting unit 41 is attached to part of the outlets 61b arranged is provided, and thus it is possible to reduce power consumption of the entire planar light-emitting illumination device 49, with the result that it is possible to save energy.

The control driver 71 for collectively driving the light-emitting units 41 may be provided outside the housing 45; for each of the light-emitting units 41, the control driver 71 for driving the light-emitting unit 41 may be provided. In this case, as shown in Fig. 3, the control driver 71 can be provided in the back surface of the mounting substrate 41b.

The light diffusion cover (diffusion member) 43 is a plate-shaped optical member that covers the light emission surface formed with the aggregation of the light-emitting units 41, and receives light emitted from the light-emitting units 41 and diffuses the light. Thus, the light diffusion cover 43 diffuses the planar light of the light-emitting units 41, and thereby can emit the uniform planar light from the entire light emission surface of the planar light-emitting illumination device 49.

The connection unit 61 is formed with the plug 61a and the outlet 61b; the outlet 61 b has insertion holes 61c that fit to the plug 6 1 a; the plug 61a fits into the insertion holes 61c. An output terminal (not shown) is provided within the insertion holes 61c; the output terminal is electrically conductive to the control driver 71. Thus, the plug 61a functions as an input terminal, and, when the plug 61a is fitted into the insertion holes 61c, the plug 61 a is connected to the output terminal, with the result that a drive signal from the control driver 71 is fed from the output terminal through the plug 6 1 a to the LED 41a on the light-emitting unit 41.

Moreover, when the plug 61a is inserted into the insertion holes 61 c, the plug 6 1 a is retained within the insertion holes 61c. Thus, the light-emitting unit 41 and the housing 45 are fixed physically and removably. In this way, it is possible to perform the operation of replacing the light-emitting unit 41 only by insertion and removal of the plug 61a and the outlet 61b, with the result that it is possible to efficiently the operation of replacing the LED 41a incapable of lighting on the light-emitting unit 41.

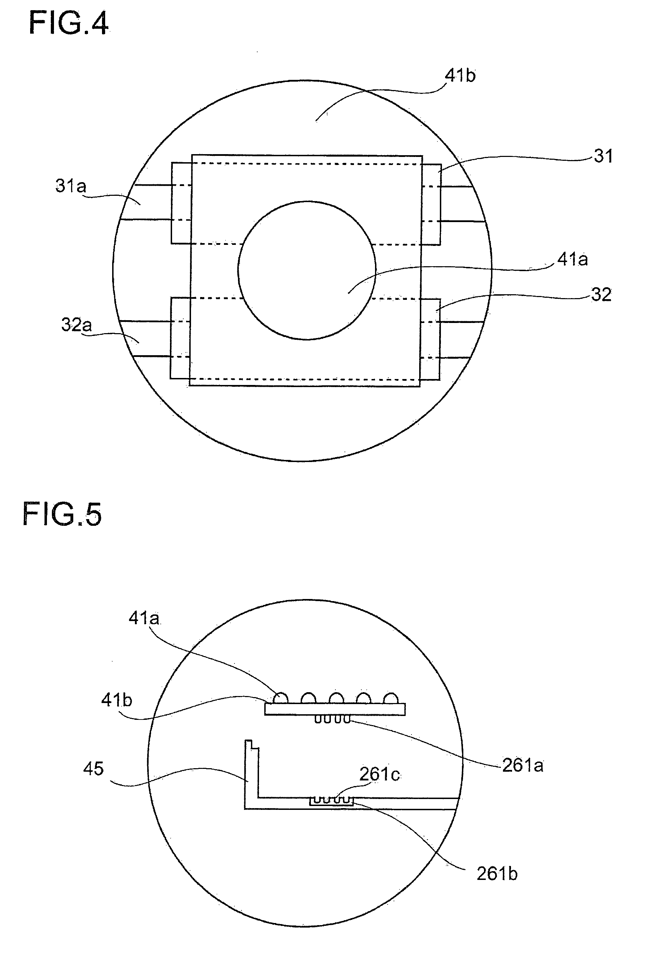

The light-emitting unit 41 will now be described in detail. Fig. 4 is a partially enlarged schematic plan view of the light-emitting unit 41. As shown in the figure, the LED 41a has an anode (positive pole) 31 and a cathode (negative pole) 32. The anode 31 and the cathode 32 are electrically connected to an anode wiring 31a and a cathode wiring 32a formed on the mounting substrate 41b; the anode wiring 31a and the cathode wiring 32a are connected to the plug 61a provided on the back surface of the mounting substrate 41b. The output terminal provided within each of the insertion holes 61c is connected to an anode wiring and a cathode wiring within the housing 45.

Thus, when the plug 6 1 a is inserted into the insertion holes 6 1 c, the anode wiring on the side of the outlet 61b becomes electrically conductive to the anode wiring 31a on the side of the plug 61a, and the cathode wiring on the side of the outlet 61b becomes electrically conductive to the cathode wiring 32a on the side of the plug 61a. Then, the drive signal from the control driver 71 is fed from the output terminal through the plug 61 a to the LED 4 1 a on the light-emitting unit 41.

### [Other embodiments]

The present invention is not limited to the embodiment described above, and various modifications are possible without departing from the spirit of the present invention.

For example, as shown in Fig. 5, a connector terminal may be used as the connection unit that connects the housing 45 and the light-emitting unit 41. The connector terminal has a plurality of convex input terminals 261 a and a plurality of insertion holes 261c; the input terminals 261a are inserted into the insertion holes 261 c, and thus the input terminals 261a are connected to the output terminal (not shown) provided in the insertion holes 261 c. With the connector terminal, it is possible to feed a plurality of drive signals from the control driver 71 to the LEDs 41a.

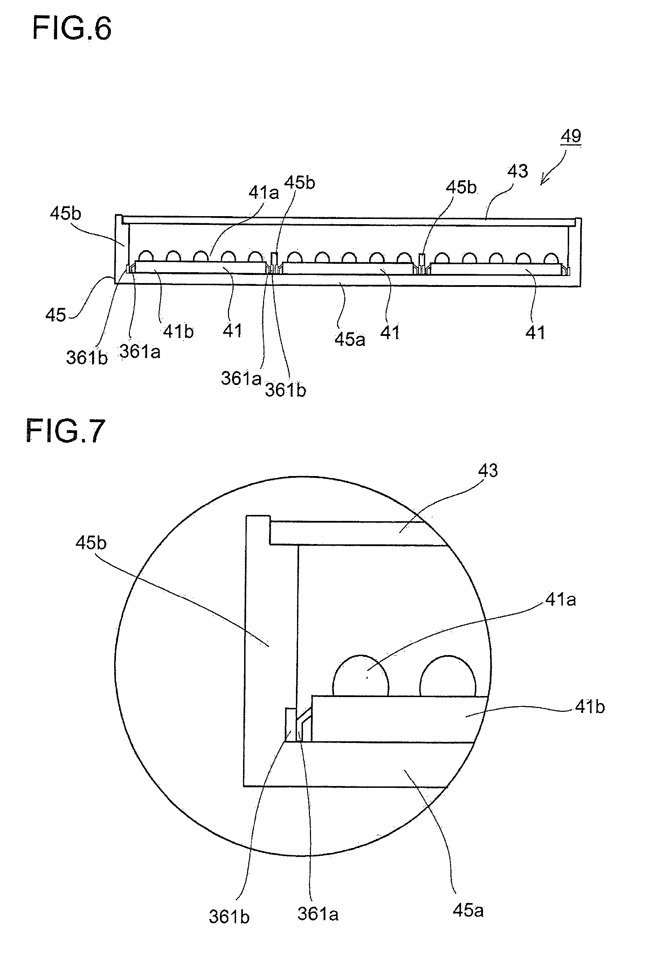

Moreover, as shown in Fig. 6, an elastic member may be used as the connection unit that connects the housing 45 and the light-emitting unit 41. Specifically, as an input terminal 361a, an elastic spring terminal is used, and the input terminal 361a is provided on the opposite side surface of the mounting substrate 41b. Within the housing 45, a side wall 45b that rises from the bottom surface 45a of the housing 45 and that surrounds the light-emitting units 41 is provided, and, in a position of the side wall 45b opposite the input terminal 361a, an output terminal 361b is provided. When the light-emitting unit 41 is held in the housing 45, the input terminal 361a presses the output terminal 361b provided in the side wall 45b, and thus the light-emitting unit 41 is retained within the light-emitting unit 41. In this way, the light-emitting unit 41 and the housing 45 are removably fixed by utilization of the elastic force of the input terminal 361a.

Here, the side wall 45b rising from the bottom surface 45a of the housing 45 is provided in a lattice shape, the interior of the housing 45 is divided into a plurality of spaces and thus it is possible to hold the light-emitting unit 41 in each of the divided spaces.

Fig. 7 is a partially enlarged schematic cross-sectional view of the planar light-emitting illumination device of Fig. 6; the input terminal 361a is formed with a metal piece having conductivity, and one end of the metal piece is coupled to the anode wiring (not shown) or the cathode wiring (not shown) extending to the side surface of the mounting substrate 41 b. The other end of the metal piece extends out in a direction away from the side surface of the mounting substrate 41b, and a spring pressure is generated in the direction away from the side surface of the mounting substrate 41b. The spring terminal is not limited to the case where the spring terminal is provided in the input terminal 361a; the spring terminal may be provided in the output terminal 361b. In this case, the output terminal 361b presses the opposite side surface of the light-emitting unit 41, and sandwiches and retains the light-emitting unit 41. A plurality of spring terminals are further provided, and thus it is possible to stably retain the light-emitting units 41 within the housing 45.

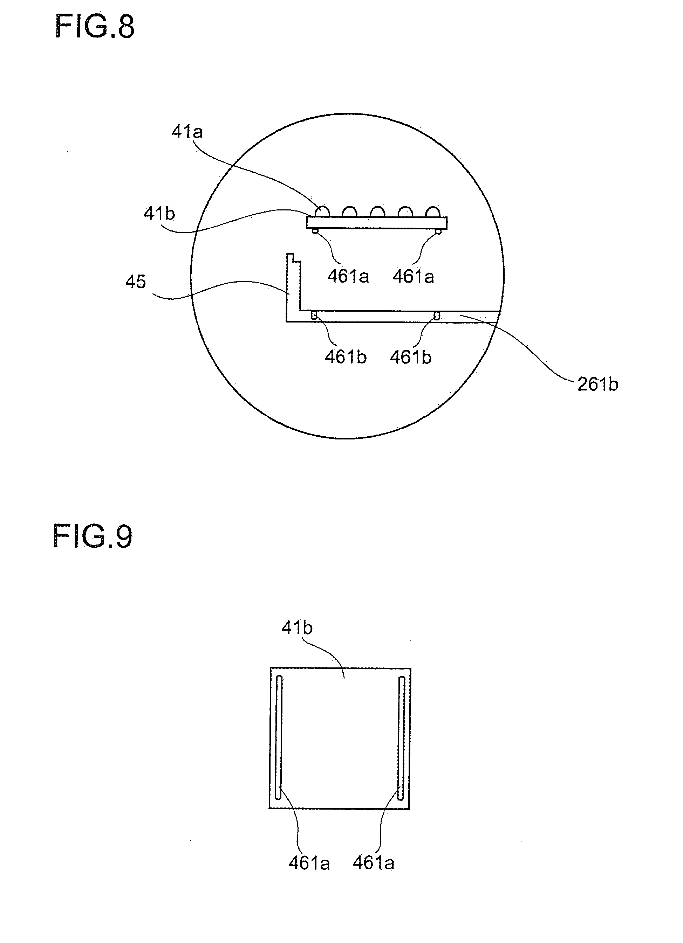

Moreover, as shown in Fig. 8, a magnet having conductivity may be used as the connection unit that connects the housing 45 and the light-emitting unit 41. Fig. 9 is a schematic plan view showing the back surface side of the light-emitting unit 41; a band-shaped input terminal 461 a formed with the conductive magnet is provided in two places of the back surface of the mounting substrate 41b. One input terminal 461a is electrically connected to the anode wiring 31a connecting to the LED 41 a, and the other input terminal 461a is electrically connected to the anode wiring 32a connecting to the LED 41a. In the inner side of the housing 45, an output terminal 461b that can absorb the input terminal 461a and that has conductivity is provided in two places.

When the input terminal 46 1 a absorbs the output terminal 461b, the light-emitting unit 41 is fixed within the housing 45 by utilization of magnetization of the magnet. The output terminal 461b is electrically connected to the anode wiring or the cathode wiring on the side of the housing 45, and, when the input terminal 461a absorbs the output terminal 461b, the anode wiring on the side of the output terminal 461b becomes electrically conductive to the anode wiring on the side of the input terminal 461a, and the cathode wiring on the side of the output terminal 461b becomes electrically conductive to the cathode wiring on the side of the input terminal 461a.

Although in the above description, the mounting substrates 41b have the same shape (only a square), the present invention is not limited to this configuration. For example, square mounting substrates 41 b and rectangular mounting substrate 41b are combined (a plurality of mounting substrates 41b having a plurality of types of shapes are collected), and thus the aggregation of the light-emitting units 41 may be formed within the housing 45. Moreover, mounting substrates 41b having another shape such as a circular shape or a triangular shape are collected, and thus the aggregation of the light-emitting units 41 may be formed.

Although in the above description, a plurality of LEDs 41a are mounted on the mounting substrate 41b, the present invention is not limited to this configuration. For example, a plurality of light-emitting units 41 each of which has one LED 41a mounted on one mounting substrate 41b may be arranged within the housing 45. In this case, since a faulty LED 41 a can be replaced by replacement of the light-emitting unit 41, it is easy to perform an operation of replacing the LED 41a. By the arrangement of the connection units provided within the housing 45, it is possible to change, as necessary, the density (distribution density) of the LEDs 41a in the planar light-emitting illumination device 49. Hence, the LEDs 41a are arranged densely, and thus it is possible to provide bright regions as compared with the other portions over the entire light emission surface 50 of the planar light-emitting illumination device 49. A light collection member such as a lens is provided on the light emission surface of each LED 41 a, and thus it is possible to increase the brightness of each LED 41a.

The light emission color of the LED 41a is not particularly limited. For example, all LEDs 41a mounted on the mounting substrate 41 b are designed to have a single color, and thus it is possible to provide a red light-emitting unit 41, a blue light-emitting unit 41 or a green light-emitting unit 41. Here, these light-emitting units 41a are mixed and arranged within the housing 45, and thus it is also possible to form the planar light-emitting illumination device 49 that applies white light by mixing the colors. Moreover, red LEDs 41a, blue LEDs 41a and green LEDs 41a are mixed and mounted on the mounting substrate 41b, and thus it is possible to form a white light-emitting unit 41 that applies white light by mixing the colors. In this case, the white light-emitting units 41 are arranged within the housing 45, and thus it is possible to form the planar light-emitting illumination device 49 that applies white light. Light-emitting units 41 that apply light of another color (single color light or mixed color light) may be combined.

### Industrial Applicability

In the planar light-emitting illumination device of the present invention, a plurality of light-emitting units are provided within the housing, the light-emitting units and the housing are removably fixed through the connection units, and thus it is possible to easily replace the light-emitting semiconductor element used in the light-emitting unit and to continue to use the housing itself by replacement of the light-emitting unit. A light-emitting unit that has a size corresponding to the housing is produced, and thus it is possible to individually sell the light-emitting unit as a replacement unit of the planar light-emitting illumination device.

### List of Reference Symbols

- 31: anode (positive pole)
- 31a: anode wiring
- 32: cathode (negative pole)
- 32a: cathode wiring
- 41: light-emitting unit
- 41a: LED
- 41b: mounting substrate
- 43: light diffusion cover
- 45: housing
- 45a: bottom surface
- 45b: side wall
- 49: planar light-emitting illumination device
- 50: light emission surface
- 61: connection unit
- 61a: plug
- 61b: outlet
- 61c: insertion hole
- 71: control driver

## Claims

1. A planar light-emitting illumination device comprising:
a light-emitting unit that includes:
a light-emitting semiconductor element;
a mounting substrate on which the light-emitting semiconductor element is mounted; and
an input terminal conductive to the light-emitting semiconductor element; and
a housing that holds a plurality of the light-emitting units and includes a plurality of output terminals through which power from an external power supply is supplied to the light-emitting units,
wherein the light-emitting unit and the housing are removably fixed by a connection unit that connects the input terminal and the output terminal.

2. The planar light-emitting illumination device of claim 1,
wherein the connection unit is formed with a convex portion and a concave portion that are fitted to each other.

3. The planar light-emitting illumination device of claim 1,
wherein the connection unit includes a conductive magnet.

4. The planar light-emitting illumination device of claim 1,
wherein the connection unit includes an elastic member,
the housing includes a side wall that surrounds the light-emitting units and
the input terminal provided on a side surface of the mounting substrate and the output terminal provided in the side wall are connected to each other by utilization of an elastic force of the connection unit.

5. The planar light-emitting illumination device of any one of claims 1 to 4,
wherein a plurality of the light-emitting semiconductor elements are arranged on the mounting substrate.

6. The planar light-emitting illumination device of any one of claims 1 to 4,
wherein a drive circuit that feeds a control signal to the light-emitting semiconductor element is provided in the light-emitting unit.

7. The planar light-emitting illumination device of any one of claims 1 to 4, further comprising:
a diffusion member that diffuses light from the light-emitting semiconductor element.

8. The planar light-emitting illumination device of any one of claims 1 to 4, further comprising:
a light collection member that collects light from the light-emitting semiconductor element.
